# EUROPEAN PATENT APPLICATION

(11) **EP 4 283 755 A1**
(43) Date of publication of application: **29.11.2023**
(21) Application number: 21969419.7
(22) Date of filing: 29.12.2021
(51) Int. Cl.: H01M 10/48

(54) **BATTERY, POWER CONSUMING DEVICE, AND METHOD FOR MANUFACTURING BATTERY**

(71) Applicant: Contemporary Amperex Technology Co., Limited, Ningde, Fujian 352100 (CN)
(72) Inventor: WANG, Chong, Ningde, Fujian 352100 (CN); CHEN, Zhiming, Ningde, Fujian 352100 (CN); ZHENG, Chenling, Ningde, Fujian 352100 (CN); GAN, Weifeng, Ningde, Fujian 352100 (CN)
(74) Representative: Behr, Wolfgang
(86) International application number: PCT/CN2021/142466
(87) International publication number: WO 2023/123047

(57) **Abstract**

The present disclosure provides a battery, a power consuming apparatus, and a method for manufacturing a battery. The battery includes a temperature sampling assembly and at least one battery cell. The temperature sampling assembly includes a shell, one end of the shell is provided with an opening configured to receive a sampling signal line, the temperature sampling assembly is mounted on the battery cell, and the opening is provided in a downwardly inclined direction. According to the battery provided in an embodiment of the present application, the shell of the temperature sampling assembly is provided with the opening that is configured to receive a sampling signal line, and the temperature sampling assembly is mounted on the battery cell with the opening being downwardly inclined, such that when condensed water generated in the battery is adhered to a surface of the temperature sampling assembly or a surface of the battery cell, the downwardly inclined opening of the temperature sampling assembly can prevent the condensed water from reversely flowing into the shell from the opening. In this way, the risk of damage to the temperature sampling assembly due to the condensed water can be reduced, thereby facilitating the improvement of the stability of the temperature sampling assembly and prolonging the service life of the temperature sampling assembly, and further facilitating the improvement of the reliability of the battery.

## Description

### Technical Field

The present application relates to the field of traction batteries, and in particular to a battery, a power consuming apparatus, and a method for manufacturing a battery.

### Background Art

Information provided in this section is only background information related to the present application, which is not necessarily the prior art.

With continuous updating and market promotion of the battery technology, batteries with a high energy density have been widely used in a wide range of fields, such as electric vehicles and ships. Some batteries in the related art include a plurality of battery cells. In order to monitor a working state of the battery cell in the battery, a sampling device is usually arranged in the battery such that working parameters of the battery cell can be measured in real time. Temperature is an important working parameter of the battery. As a result, it is necessary to provide a temperature sampling assembly in the battery. When air humidity in an environment in which the battery is located is high, condensed water will be formed on a surface of the battery cell, and once the condensed water comes into contact with a terminal of the temperature sampling assembly, there is a risk of damage to the temperature sampling assembly. Therefore, how to reduce the risk of damage to the temperature sampling assembly due to the condensed water is a problem urgently to be solved.

### Summary of the Invention

An objective of the present application is to provide a battery, a power consuming apparatus, and a method for manufacturing a battery, so as to reduce the risk of damage to a temperature sampling assembly in the battery due to condensed water. The specific technical solution is as follows:
In a first aspect, an embodiment of the present application provides a battery, including: a temperature sampling assembly and at least one battery cell. The temperature sampling assembly includes a shell, one end of the shell is provided with an opening configured to receive a sampling signal line, the temperature sampling assembly is mounted on the battery cell, and the opening is provided in a downwardly inclined direction.

According to the battery in the embodiment of the present application, the shell of the temperature sampling assembly is provided with the opening that is configured to receive a sampling signal line, and the temperature sampling assembly is mounted on the battery cell with the opening being downwardly inclined, such that when condensed water generated in the battery is adhered to a surface of the temperature sampling assembly or a surface of the battery cell, the downwardly inclined opening of the temperature sampling assembly can prevent the condensed water from reversely flowing into an inner interface of the shell from the opening. In this way, the risk of damage to the temperature sampling assembly due to the condensed water can be reduced, thereby facilitating the improvement of the stability of the temperature sampling assembly and prolonging the service life of the temperature sampling assembly, and further facilitating the improvement of the reliability of the battery.

In some embodiments, the battery further includes a mounting frame and an elastic thermally-conductive gasket. The mounting frame is connected to the battery cell, the elastic thermally-conductive gasket is attached to a surface of the battery cell, the mounting frame is configured to mount the shell, and the elastic thermally-conductive gasket is located between the shell and the battery cell; and under a combined limiting action of the mounting frame and the elastic thermally-conductive gasket, the shell is fixed on the battery cell in an orientation where the opening is downwardly inclined. Under the combined action of the mounting frame and the elastic thermally-conductive gasket, the shell can be mounted on the battery cell in a downwardly inclined manner, thereby effectively preventing the condensed water from flowing back into the temperature sampling assembly through the opening. In addition, the use of the elastic thermally-conductive gasket can absorb a dimensional tolerance between the shell and the battery cell after the shell is mounted on the mounting frame.

In some embodiments, the mounting frame includes a base, a first limiting structure and a second limiting structure. The base is provided with a through groove configured to accommodate the shell, the first limiting structure and the second limiting structure are arranged on the base, the shell is limited in the through groove by means of the first limiting structure and the second limiting structure, and a distance between the first limiting structure and the opening of the shell is greater than a distance between the second limiting structure and the opening of the shell; and the first limiting structure includes a first limiting portion configured to press against the shell, the second limiting structure includes a second limiting portion configured to press against the shell, and the first limiting portion is arranged higher than the second limiting portion. The first limiting structure is farther away from the opening of the shell, and the second limiting structure is closer to the opening of the shell. On this basis, the first limiting portion is arranged higher than the second limiting portion and, in addition, a bottom of the shell is provided with the elastic thermally-conductive gasket as a support, such that the entire shell is in an inclined posture, and the opening of the shell is inclined downwardly.

In some embodiments, the first limiting structure is a snap-fit or a pressure strip member. The snap-fit and the pressure strip member have the advantages of a simple structure and convenient mounting, and it is thus conducive to improvement in the mounting efficiency of the temperature sampling assembly, and is further conducive to saving in cost.

In some embodiments, the second limiting structure is a snap-fit or a pressure strip member. In this way, it is also conducive to improvement in the mounting efficiency of the temperature sampling assembly, and is further conducive to saving in cost.

In some embodiments, the snap-fit includes a support portion and a snap-fit portion located at an upper end of the support portion. The position and height of the temperature sampling assembly are jointly defined by means of the support portion and the snap-fit portion of the snap-fit. A snap-fit form has fewer steps in mounting of the temperature sampling assembly, thereby facilitating the improvement of the assembly efficiency of the battery.

In some embodiments, the pressure strip member includes a pressure strip and a connector. An end portion of the pressure strip is connected to the base via the connector. The shell is pressed down by means of the pressure strip, the shell presses the elastic thermally-conductive gasket, and the pressure strip and the elastic thermally-conductive gasket jointly define an inclination angle of the shell. In addition, when the connector is a screw, a height of the adjusting pressure strip may further be adjusted by adjusting a screwing depth of the screw, thereby adjusting the magnitude of downward inclination of the opening of the shell.

In some other embodiments, the first limiting structure includes a side plate and a top plate arranged at an upper end of the side plate. The top plate is the first limiting portion. The side plate and the top plate jointly form a structure for mounting the shell. A plate-like structure has a better fixing effect, and the shell can extend below the top plate. Thus, the mounting step is omitted, and the assembly efficiency is higher.

In some embodiments, the side plate is a "C"-shaped plate. The side plate 428 is a "C"-shaped plate, and the "C"-shaped plate can limit the shell in multiple directions. Under a surrounding action of the "C"-shaped plate, the shell can be mounted more firmly. In addition, a longer connecting line between the "C"-shaped plate and the top plate also makes the first limiting structure have a better structural strength and structural stiffness.

In some embodiments, the top plate, the side plate and the base are of an integrally formed structure. The top plate, the side plate and the base are of an integrally formed structure, so that a mounting and connection process between the first limiting structure and the base can be saved, thereby facilitating the improvement of the assembly efficiency.

In some embodiments, the battery further includes an electrical connecting sheet. The battery cell further includes a terminal post, the electrical connecting sheet is connected to the terminal post of the battery cell, and the mounting frame is pressed against and fixed to the surface of the battery cell via the electrical connecting sheet. The electrical connecting sheet is fixedly connected to the terminal post of the battery cell, and the electrical connecting sheet is tightly pressed against and attached to the surface of the battery cell, so that the arrangement of the mounting frame between the electrical connecting sheet and the surface of the battery cell can fix the mounting frame. The mounting frame is fixed with the electrical connecting sheet that must be used in the battery, so that some fixing steps can be omitted.

In some other embodiments, the shell includes a shell bottom plate and a shell top plate. The shell top plate is not parallel to the shell bottom plate, such that the shell has a cross-sectional area gradually reduced from the end away from the opening to the end close to the opening. The shell top plate is not parallel to the shell bottom plate, so that the entire shell is in a wedge-shaped structure, with the cross-sectional area of the shell gradually reduced from the end away from the opening to the end close to the opening. In this case, the mounting of the shell on the surface of the battery cell can achieve the effect of downward inclination of the opening.

In some other embodiments, the shell bottom plate is attached to the surface of the battery cell. On the basis that the shell top plate and the shell bottom plate of the shell are not parallel to each other, the shell has the effect of downward inclination of the opening. In this case, the shell can be directly attached to the surface of the battery cell.

In a second aspect, an embodiment of the present application provides a power consuming apparatus, including a battery in any embodiment in the first aspect. The battery is configured to supply electric energy for the power consuming apparatus.

According to the power consuming apparatus in the embodiment of the present application, the battery includes a temperature sampling assembly and at least one battery cell, a shell of the temperature sampling assembly is provided with an opening that is configured to receive a sampling signal line, and the temperature sampling assembly is mounted on the battery cell with the opening being downwardly inclined, such that when condensed water generated in the battery is adhered to a surface of the temperature sampling assembly or a surface of the battery cell, the downwardly inclined opening of the temperature sampling assembly can prevent the condensed water from reversely flowing into the shell from the opening. In this way, the risk of damage to the temperature sampling assembly due to the condensed water can be reduced, thereby facilitating the improvement of the stability of the temperature sampling assembly and prolonging the service life of the temperature sampling assembly, and further facilitating the improvement of the reliability of the battery.

In a third aspect, an embodiment of the present application provides a method for manufacturing a battery, the method including: providing a temperature sampling assembly and at least one battery cell. The temperature sampling assembly includes a shell, one end of the shell is provided with an opening configured to receive a sampling signal line, the temperature sampling assembly is mounted on the battery cell, and the opening is provided in a downwardly inclined direction.

In the battery manufactured by the method for manufacturing a battery in the embodiment of the present application, the shell of the temperature sampling assembly is provided with the opening that is configured to receive a sampling signal line, and the temperature sampling assembly is mounted on the battery cell with the opening being downwardly inclined, such that when condensed water generated in the battery is adhered to a surface of the temperature sampling assembly or a surface of the battery cell, the downwardly inclined opening of the temperature sampling assembly can prevent the condensed water from reversely flowing into the shell from the opening. In this way, the risk of damage to the temperature sampling assembly due to the condensed water can be reduced, thereby facilitating the improvement of the stability of the temperature sampling assembly and prolonging the service life of the temperature sampling assembly, and further facilitating the improvement of the reliability of the battery.

The description described above is only an overview of the technical solutions of the present application. In order to more clearly understand the technical means of the present application to implement same according to the contents of the description, and in order to make what is described above and other objectives, features and advantages of the present application more obvious and understandable, specific implementations of the present application are exemplarily described below.

### Brief Description of the Drawings

In order to more clearly illustrate the technical solutions in the embodiments of the present application or in the prior art, the accompanying drawings required in the description of the embodiments or in the prior art will be briefly described below. Obviously, the accompanying drawings described below are merely some embodiments of the present application, and for those of ordinary skill in the art, other embodiments can be obtained from these accompanying drawings, in which:
FIG. 1 is a schematic structural diagram of a vehicle using a battery according to an embodiment;
FIG. 2 is a schematic structural diagram of a battery according to an embodiment of the present application;
FIG. 3 is an exploded view of a battery according to some embodiments of the present application;
FIG. 4 is a schematic structural diagram of a battery according to some embodiments of the present application;
FIG. 5 is a partial cross-sectional schematic view of the battery shown in FIG. 4;
FIG. 6 is a schematic structural diagram of a mounting frame according to some embodiments of the present application;
FIG. 7 is a cross-sectional view of a mounting frame according to some other embodiments of the present application;
FIG. 8 is a schematic structural diagram of a mounting frame according to some other embodiments of the present application; and
FIG. 9 is a schematic structural diagram of a temperature sampling assembly according to some other embodiments of the present application.

Reference signs are as follows:
1 - Vehicle, 10 - Battery, 20 - Controller, 30 - Motor, 100 - Case, 101 - Upper cover, 102 - Casing, 200 - Battery cell, 210 - Terminal post;
300 - Temperature sampling assembly, 310 - Shell, 311 - Shell bottom plate, 312 - Shell top plate, 320 - Opening, 350 - Sampling signal line;
400 - Mounting frame, 410 - Base, 411 - Through groove, 420 - First limiting structure, 421 - First limiting portion, 422 - Snap-fit, 423 - Pressure strip member, 424 - Support portion, 425 - Snap-fit portion, 426 - Pressure strip, 427 - Connector, 428 - Side plate, 429 - Top plate, 430 - Second limiting structure, 431 - Second limiting portion;
500 - Elastic thermally-conductive gasket, 600 - Electrical connecting sheet.

### Detailed Description of Embodiments

Embodiments of the technical solutions of the present application will be described in detail below with reference to the accompanying drawings. The following embodiments are merely intended to more clearly illustrate the technical solutions of the present application, so they merely serve as examples, but are not intended to limit the scope of protection of the present application.

Unless otherwise defined, all technical and scientific terms used herein have the same meanings as those commonly understood by those skilled in the art to which the present application belongs. The terms used herein are merely for the purpose of describing specific embodiments, but are not intended to limit the present application. The terms "comprising" and "having" and any variations thereof in the description and the claims of the present application as well as the brief description of the accompanying drawings described above are intended to cover non-exclusive inclusion.

In the description of the embodiments of the present application, the technical terms "first", "second", etc. are merely used for distinguishing different objects, and are not to be construed as indicating or implying relative importance or implicitly indicating the number, particular order or primary-secondary relationship of the indicated technical features. In the description of the embodiments of the present application, the phrase "a plurality of means two or more, unless otherwise explicitly and specifically defined.

The phrase "embodiment" mentioned herein means that the specific features, structures, or characteristics described in conjunction with the embodiment can be encompassed in at least one embodiment of the present application. The phrase at various locations in the description does not necessarily refer to the same embodiment, or an independent or alternative embodiment exclusive of another embodiment. Those skilled in the art understand explicitly or implicitly that the embodiment described herein may be combined with another embodiment.

In the description of the embodiments of the present application, the term "and/or" is merely intended to describe the associated relationship of associated objects, indicating that three relationships can exist, for example, A and/or B may include: only A exists, both A and B exist, and only B exists. In addition, the character "/" herein generally indicates an "or" relationship between the associated objects.

In the description of the embodiments of the present application, the term "a plurality of means two or more (including two), similarly the term "a plurality of groups" means two or more groups (including two groups), and the term "a plurality of pieces" means two or more pieces (including two pieces).

In the description of the embodiments of the present application, the orientation or position relationship indicated by the technical terms "central", "longitudinal", "transverse", "length", "width", "thickness", "upper", "lower", "front"; "rear", "left", "right", "vertical", "horizontal", "top", "bottom", "inner", "outer", "clockwise", "counterclockwise", "axial", "radial", "circumferential", etc. are based on the orientation or position relationship shown in the accompanying drawings and are merely intended to facilitate and simplify the description of the embodiments of the present application, rather than indicating or implying that the device or element considered must have a particular orientation or be constructed and operated in a particular orientation, and therefore not to be construed as limiting the embodiments of the present application.

In the description of the embodiments of the present application, unless otherwise explicitly specified and defined, the technical terms such as "mounting", "connecting", and "connection", "fixing", etc. should be understood in a broad sense, for example, they may be a fixed connection, a detachable connection, or an integrated connection; may be a mechanical connection or an electric connection; or may be a direct connection or an indirect connection by means of an intermediate medium, or may be communication between interiors of two elements or interaction between the two elements. For those of ordinary skill in the art, the specific meanings of the above terms in the embodiments of the present application can be understood according to specific situations.

With continuous updating and market promotion of the battery technology, batteries with a high energy density have been widely used in a wide range of fields, such as electric vehicles and ships. The inventors have noticed that, as the requirement for an overall energy density of the battery becomes increasingly high, a technology of directly arranging battery cells in a case of the battery is increasingly widely applied. In such a grouping technology, more battery cells may be arranged in a limited space, thereby increasing a volumetric energy density. Each battery cell in a battery system may not be completely the same. Moreover, along with increase in use time, differences between the battery cells become increasingly larger. Due to the existence of these differences, consistency of the battery cells become worse, thereby affecting the overall performance of the battery, or even causing serious accidents such as fire and explosion due to failure to take reasonable control. Therefore, a temperature sampling assembly configured to monitor the battery cell is arranged in the battery, and control and treatment may be made in a timely manner when an abnormality is found, so as to achieve a protection effect on charging and discharging of the battery. When an abnormality such as the temperature of a battery pack exceeding a safety threshold is found, an alarm signal is sent for early warning, so as to avoid danger.

In some temperature sample assemblies in the related art, a shell of the temperature sampling assembly is provided with a connecting port configured to receive a connecting wire, and a sampled temperature is transmitted to a battery management system in the form of an electrical signal through the connecting wire. Since the connecting port is generally in a plug-in connection, and has a small size space, it is difficult to achieve complete sealing. A change of an ambient temperature during use of the battery causes condensed water to be generated on the surface of the battery cell. The condensed water may flow into the temperature sampling assembly through the connecting port under the action of gravity, and makes contact with an electrical connecting interface. Once such a condition occurs, there is the risk of damage to the temperature sampling assembly, thereby further affecting the reliability of the temperature sampling assembly.

Through in-depth research, the inventors have proposed a novel mounting form of a temperature sampling assembly in a battery. One side of the connecting port of the temperature sampling assembly is mounted on the battery cell in a downwardly inclined manner at a certain angle, such that the condensed water is prevented from reversely flowing into the electrical connecting interface of the temperature sampling assembly through the connecting port, thereby facilitating the improvement of the working reliability of the temperature sampling assembly, and further facilitating the improvement of the reliability of the battery.

The battery disclosed in the embodiment of the present application may be used in, but not limited to, a power consuming device such as a vehicle, a ship or an aircraft. The power consuming device may be, but not limited to, a mobile phone, a tablet, a notebook computer, an electric toy, an electric tool, a battery cart, an electric vehicle, a ship, a spacecraft, etc. The electric toy may include a stationary or mobile electric toy, such as a game console, an electric vehicle toy, an electric ship toy, and an electric airplane toy. The spacecraft may include an airplane, a rocket, a space shuttle, a spaceship, etc.

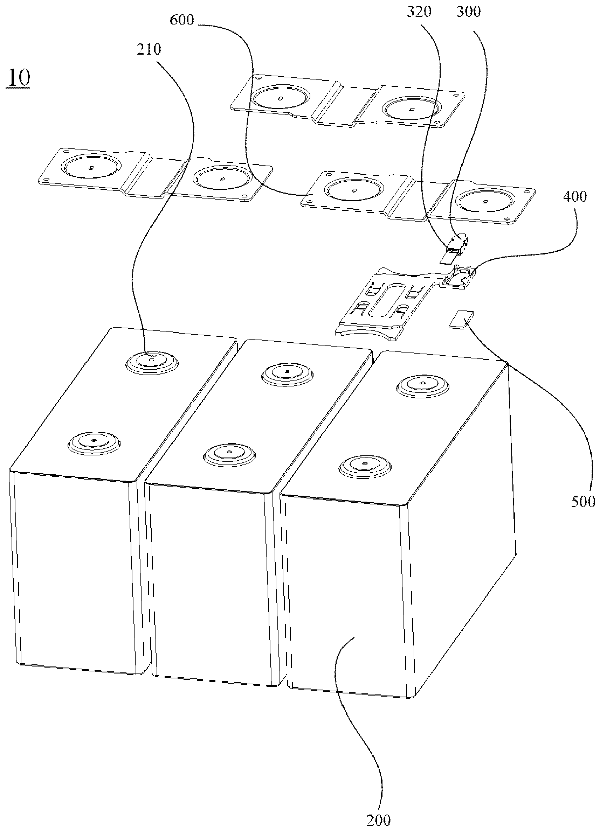

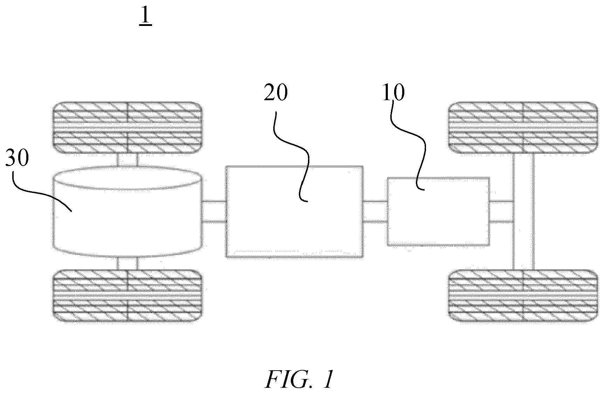

As shown in FIG. 1, which is a schematic structural diagram of a power consuming apparatus, i.e., a vehicle 1, using a battery of an embodiment of the present application, the vehicle 1 may be a fuel oil vehicle, a gas vehicle or a new energy vehicle. The new energy vehicle may be a battery electric vehicle, a hybrid vehicle or an extended-range vehicle, etc. A motor 30, a controller 20 and a battery 10 may be provided inside the vehicle 1. The controller 20 is configured to control the battery 10 to supply power to the motor 30. For example, the battery 10 may be arranged at the bottom, the head, or the tail of the vehicle 1. The battery 10 may be configured to supply power to the vehicle 1. For example, the battery 10 may serve as a power source for operating the vehicle 1 for use in a circuit system of the vehicle 1, for example, to satisfy the working power demand of the vehicle 1 during startup, navigation and running. In another embodiment of the present application, the battery 10 may not only serve as a power source for operating the vehicle 1, but may also serve as a power source for driving the vehicle 1, instead of or partially instead of fuel or natural air, to provide driving power for the vehicle 1.

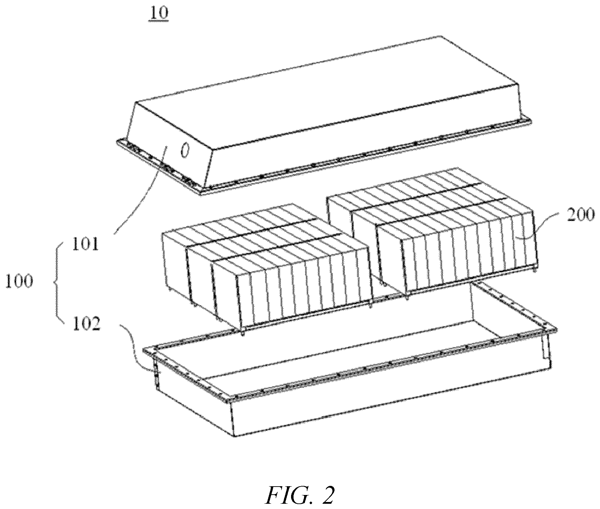

As shown in FIG. 2, the battery 10 mentioned in the embodiment of the present application refers to a single physical module that includes one or more battery cells 200 to supply higher voltage and capacity. For example, the battery 10 mentioned in the present application may include a battery module, a battery pack, etc. The battery 10 generally includes a case 100 configured to package one or more battery cells 200. The case 100 may prevent a liquid or other foreign objects from affecting charging or discharging of the battery cell. Specifically, the case 100 may include an upper cover 101 and a casing 102. The upper cover 101 and the casing 102 are snap-fitted together. The upper cover 101 and the casing 102 may be shaped depending on a shape of a combination of the plurality of battery cells 200.

The plurality of battery cells 200 may be connected in series and/or in parallel via terminal posts for various application scenarios. In some high-power application scenarios such as electric vehicles, the application of the battery 10 includes three levels: a battery cell 200, a battery module and a battery pack. The battery module is formed by electrically connecting a number of battery cells together and putting the battery cells into a frame in order to protect the battery cells from external shocks, heat, vibration, etc. The battery pack is a final state of a battery system mounted in the electric vehicle. The battery pack generally includes a case configured to package one or more battery cells. The case may prevent the liquid or other foreign objects from affecting charging or discharging of the battery cell. The case is generally composed of a cover and a casing. Most of the current battery packs are manufactured by assembling various control and protection systems such as a battery management system (BMS) and a thermal management component on one or more battery modules. With the development of technologies, the level of the battery module may be omitted. That is, the battery pack is directly formed by the battery cells. With this improvement, the number of parts is remarkably reduced while a weight energy density and a volume energy density of the battery system are improved. The battery mentioned in the present application includes a battery module or a battery pack.

In the present application, the battery cell 200 may include a lithium ion secondary battery, a lithium ion primary battery, a lithium-sulfur battery, a sodium lithium ion battery, a sodium ion battery or a magnesium ion battery, etc., which is not limited in the embodiment of the present application. The battery cell may be cylindrical, flat, cuboid, prismatic or other shapes, which is also not limited in the embodiment of the present application. The battery cells 200 are generally classified into three types depending on the way of package: cylindrical battery cells, prismatic battery cells and pouch battery cells, which is also not be limited in the embodiment of the present application.

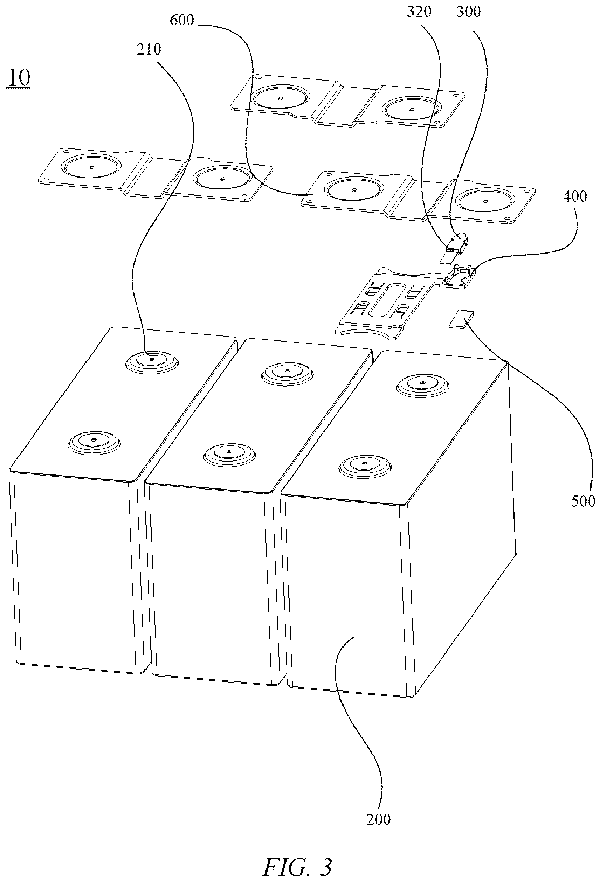

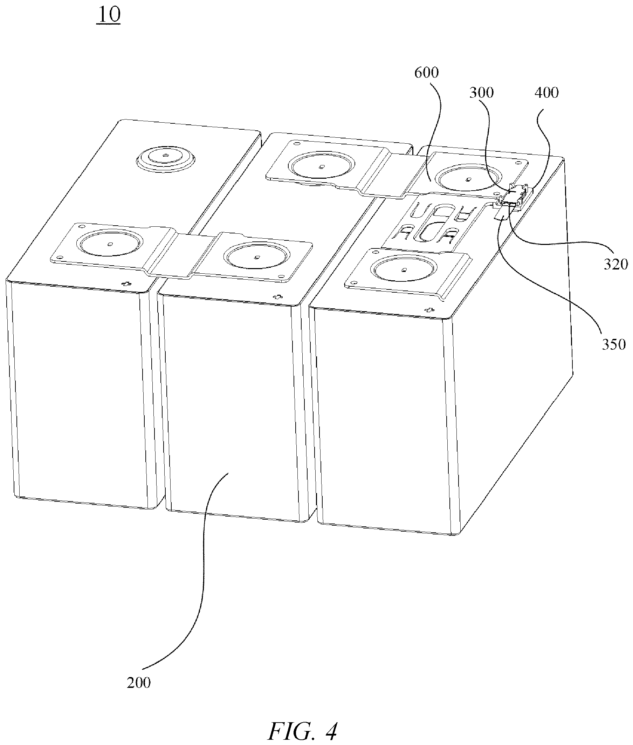

With reference to FIGS. 3 to 5, a first aspect of the present application provides a battery 10. The battery 10 includes a temperature sampling assembly 300 and at least one battery cell 200. The temperature sampling assembly 300 includes a shell 310, one end of the shell 310 is provided with an opening 320 configured to receive a sampling signal line 350, the temperature sampling assembly 300 is mounted on the battery cell 200, and the opening 320 is provided in a downwardly inclined direction.

The battery cell 200 is a small unit forming the battery 10. The battery cell 200 may include an end cap, a housing, a battery core assembly and other functional components, such as an insulating layer. The end cap refers to a component that covers an opening of the housing to isolate an internal environment of the battery cell 200 from an external environment. The housing is a component for accommodating an electrode assembly to form the battery cell 200. The housing further includes an electrolyte solution and other component structures therein. The housing may be made of various materials, such as iron, aluminum, stainless steel, etc., and the electrode assembly is a component in the battery cell 200 where an electrochemical reaction occurs. The housing may include one or more electrode assemblies therein. The electrode assembly is mainly formed by winding or stacking a positive electrode plate and a negative electrode plate, and a separator is usually provided between the positive electrode plate and the negative electrode plate.

The temperature sampling assembly 300 is an assembly capable of collecting a temperature signal of the battery cell 200, and the temperature sampling assembly 300 transmits collected temperature information to a battery management system in the form of an electrical signal through the sampling signal line 350.

The sampling signal line refers to a wire or a cable that can transmit the electrical signal.

The shell 310 is configured to protect a terminal inside the temperature sampling assembly 300 and an electrical connecting interface between electronics and the sampling signal line 350. The terminal may specifically be a thermistor, which has the characteristic that its resistance value is changed with a temperature. The shell 310 may be a metal shell, which has an excellent thermal conductivity. When the temperature of a surface of the battery cell 200 is increased, the battery cell 200 conducts heat to the shell 310 of the temperature sampling assembly 300, such that the temperature of the shell 310 is increased, and the temperature of the terminal located in the shell 310 is thus increased, so that the resistance value of the terminal is changed.

The temperature sampling assembly 300 is mounted on the battery cell 200 in an orientation where the opening 320 is downwardly inclined. By "downward" is the direction of gravity, and the opening 320 is inclined downwardly, so that it is difficult for condensed water in the battery 10 to reversely flow into the temperature sampling assembly 300 through the opening 320.

According to the battery provided in an embodiment of the present application, the shell 310 of the temperature sampling assembly 300 is provided with the opening 320, the opening 320 is configured to receive a sampling signal line 350, and the temperature sampling assembly 300 is mounted on the battery cell 200 with the opening 320 being downwardly inclined, such that when condensed water generated in the battery is adhered to a surface of the temperature sampling assembly 300 or a surface of the battery cell 200, the downwardly inclined opening 320 of the temperature sampling assembly 300 can prevent the condensed water from reversely flowing into the shell 310 from the opening 320. In this way, the risk of damage to the temperature sampling assembly 300 due to the condensed water can be reduced, thereby facilitating the improvement of the stability of the temperature sampling assembly 300 and prolonging the service life of the temperature sampling assembly, and further facilitating the improvement of the reliability of the battery 10.

According to some embodiments of the present application, the battery 10 further includes a mounting frame 400 and an elastic thermally-conductive gasket 500. The mounting frame 400 is connected to the battery cell 200, the elastic thermally-conductive gasket 500 is attached to a surface of the battery cell 200, the mounting frame 400 is configured to mount the shell 310, and the elastic thermally-conductive gasket 500 is located between the shell 310 and the battery cell 200; and under a combined limiting action of the mounting frame 400 and the elastic thermally-conductive gasket 500, the shell 310 is fixed on the battery cell 200 in an orientation where the opening 320 is downwardly inclined.

The mounting frame 400 is a holder structure configured to mount the temperature sampling assembly 300 on the battery cell 200.

The elastic thermally-conductive gasket 500 is a gasket having elasticity and excellent thermal conductivity, which is mounted between the battery cell 200 and the shell 310, and can transfer heat of the battery cell 200 to the shell 310.

The mounting frame 400 fixes the shell 310 on the battery cell 200, and the elastic thermally-conductive gasket 500 is located between the shell 310 and the battery cell 200. The elastic thermally-conductive gasket 500 is configured such that a gap between the shell 310 and the battery cell 200 after the shell 310 is mounted on the mounting frame 400 can be offset. The elastic thermally-conductive gasket 500 has a strong plasticity. Under a combined action of the mounting frame 400 and the elastic thermally-conductive gasket 500, the shell 310 can be mounted on the battery cell 200 in a downwardly inclined manner, thereby effectively preventing the condensed water from flowing back into the temperature sampling assembly 300 through the opening 320. In addition, the use of the elastic thermally-conductive gasket 500 can absorb a dimensional tolerance between the shell 310 and the battery cell 200 after the shell 310 is mounted on the mounting frame 400.

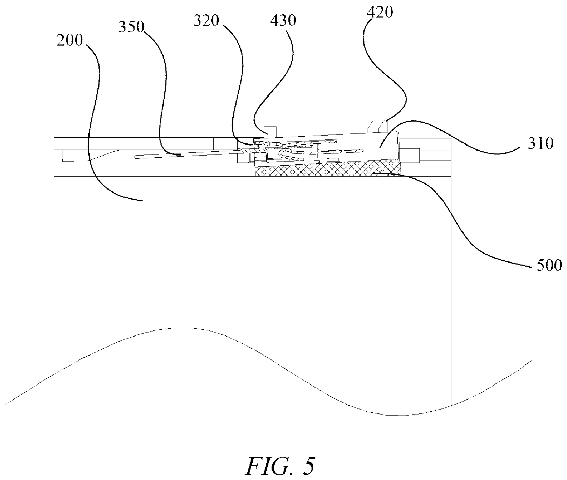

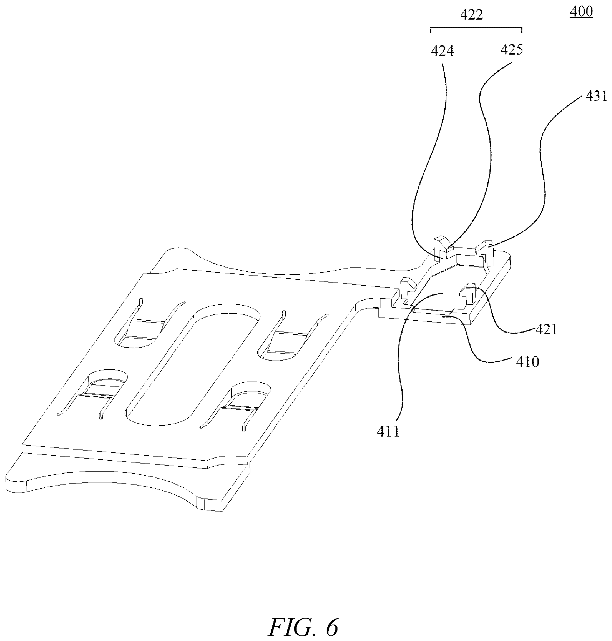

With reference to FIGS. 5 and 6, according to some embodiments of the present application, the mounting frame 400 includes a base 410, a first limiting structure 420 and a second limiting structure 430. The base 410 is provided with a through groove 411 configured to accommodate the shell 310, the first limiting structure 420 and the second limiting structure 430 are arranged on the base 410, the shell 310 is limited in the through groove 411 by means of the first limiting structure 420 and the second limiting structure 430, and a distance between the first limiting structure 420 and the opening 320 of the shell 310 is greater than a distance between the second limiting structure 430 and the opening 320 of the shell 310; and the first limiting structure 420 includes a first limiting portion 421 configured to press against the shell 310, the second limiting structure 430 includes a second limiting portion 431 configured to press against the shell 310, and the first limiting portion 421 is arranged higher than the second limiting portion 431.

The base 410 is a main structure of the mounting frame 400, and has two functions. Firstly, the base provides an accommodation space for the shell 310 of the temperature sampling assembly 300. Secondly, the base provides a mounting foundation for the first limiting structure 420 and the second limiting structure 430. That is, the first limiting structure 420 and the second limiting structure 430 are both arranged on the base 410.

The through groove 411 is a groove structure penetrating an upper face and a lower face of the base 410. When the temperature sampling assembly 300 is in the through groove 411, the temperature sampling assembly is limited in a horizontal direction.

The first limiting structure 420 and the second limiting structure 430 are structures on the base 410 that mainly limit the temperature sampling assembly 300 in a vertical direction. The first limiting portion 421 is a portion of the first limiting structure 420 that makes direct contact with the shell 310 to limit the shell 310. Similarly, the second limiting portion 431 is a portion of the second limiting structure 430 that makes direct contact with the shell 310 to limit the shell 310.

According to the battery in the embodiment of the present application, the distance between the first limiting structure 420 and the opening 320 of the shell 310 is greater than the distance between the second limiting structure 430 and the opening 320 of the shell 310. That is, the first limiting structure 420 is farther away from the opening 320 of the shell 310, and the second limiting structure 430 is closer to the opening 320 of the shell 310. On this basis, the first limiting portion 421 is arranged higher than the second limiting portion 431 and, in addition, a bottom of the shell 310 is provided with the elastic thermally-conductive gasket 500 as a support, such that the entire shell 310 is in an inclined posture, and the opening of the shell 310 is inclined downwardly.

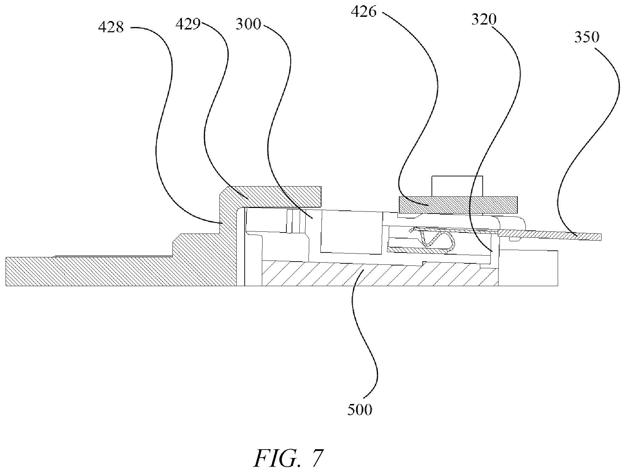

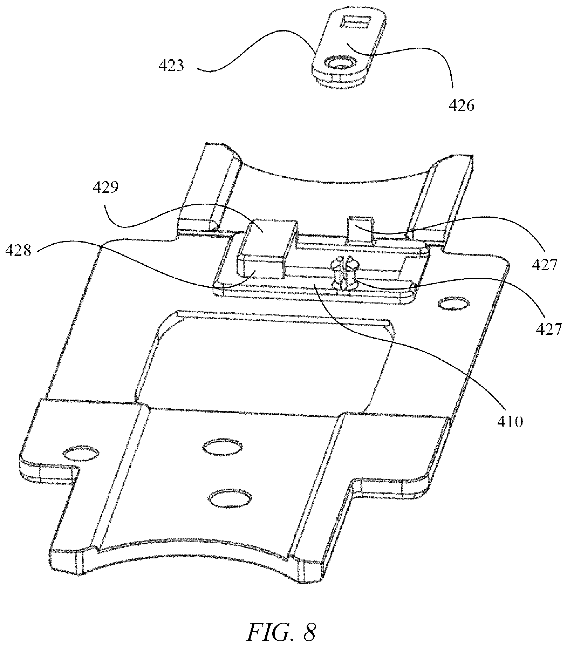

According to some embodiments of the present application, the first limiting structure 420 is a snap-fit 422 (with reference to FIGS. 5 and 6) or a pressure strip member 423 (with reference to FIGS. 7 and 8).

The snap-fit 422 is a connecting structure that may elastically deform when being subjected to pressing action, and may be restored when the pressing action is removed. After restoration, workpieces can be fixedly mounted in a snap-fitting manner.

The pressure strip member 423 is a connecting structure that fixedly mount the workpieces by means of compression.

The snap-fit 422 and the pressure strip member 423 have the advantages of a simple structure and convenient mounting, and it is thus conducive to improvement in the mounting efficiency of the temperature sampling assembly 300, and is further conducive to saving in cost.

According to some embodiments of the present application, the second limiting structure 430 is a snap-fit 422 or a pressure strip member 423.

In this way, it is also conducive to improvement in the mounting efficiency of the temperature sampling assembly 300, and is further conducive to saving in cost.

With reference to FIGS. 5 and 6, according to some embodiments of the present application, the snap-fit 422 includes a support portion 424 and a snap-fit portion 425 located at an upper end of the support portion 424.

The snap-fit portion 425 is a portion of the snap-fit 422 that makes direct contact with the shell 310 to limit the shell 310.

The support portion 424 is a connecting structure located between the snap-fit portion 425 and the base 410. The support portion 424 may elastically deform when being subjected to compression, and may be restored when the compression action is removed. The support portion 424 may be a rod-shaped, plate-shaped, or helical structure.

The position and height of the temperature sampling assembly 300 are jointly defined by means of the support portion 424 and the snap-fit portion 425 of the snap-fit 422. A snap-fit 422 form has fewer steps in mounting of the temperature sampling assembly 300, thereby facilitating the improvement of the assembly efficiency of the battery 10.

With reference to FIGS. 7 and 8, according to some embodiments of the present application, the pressure strip member 423 includes a pressure strip 426 and a connector 427. An end portion of the pressure strip 426 is connected to the base 410 via the connector 427.

The pressure strip 426 is a strip-shaped structure that can apply pressure to the shell 310 to fix the shell 310.

The connector 427 is configured to connect the pressure strip 426 to the base 410. Specifically, two ends of the pressure strip 426 may be connected and fixed to the base 410 via the connector 427, and the connector 427 may be a screw or a quick insertion structure. The elastic thermally-conductive gasket 500 is arranged between the shell 310 and the battery cell 200. The shell 310 may be pressed to the elastic thermally-conductive gasket 500 by means of the pressure of the pressure strip 426. A fixed height of the pressure strip 426 is a fixed height of the shell 310 located on one side of the pressure strip 426. An inclination direction of the shell 310 is adjusted by adjusting a downward pressing depth of the pressure strip 426.

The shell 310 is pressed down by means of the pressure strip 426, and the shell 310 presses the elastic thermally-conductive gasket 500. The pressure strip and the elastic thermally-conductive gasket 500 jointly define an inclination angle of the shell 310. In addition, when the connector 427 is a screw, a height of the adjusting pressure strip may further be adjusted by adjusting a screwing depth of the screw, thereby adjusting the magnitude of downward inclination of the opening 320 of the shell 310.

According to some other embodiments of the present application, the first limiting structure 420 includes a side plate 428 and a top plate 429 arranged at an upper end of the side plate 428. The top plate 429 is the first limiting portion 421.

The side plate 428 and the top plate 429 at the upper end of the side plate 428 are combined, and the shell 310 is mounted between the side plate 428 and the top plate 429. A combination of the side plate 428 and the top plate 429 jointly limits a height of the side of the shell 310 away from the opening 320.

According to the embodiment of the present application, the side plate 428 and the top plate 429 jointly form a structure for mounting the shell 310. A plate-like structure has a better fixing effect, and the shell 310 can extend below the top plate 429. Thus, the mounting step is omitted, and the assembly efficiency is higher.

According to some embodiments of the present application, the side plate 428 is a "C"-shaped plate.

The side plate 428 is the "C"-shaped plate, and the "C"-shaped plate can limit the shell 310 in multiple directions. Under a surrounding action of the "C"-shaped plate, the shell 310 can be mounted more firmly. In addition, a longer connecting line between the "C"-shaped plate and the top plate 429 also makes a first limiting structure 420 have a better structural strength and structural stiffness. According to some embodiments of the present application, the top plate 429, the side plate 428 and the base 410 are of an integrally formed structure.

The top plate 429, the side plate 428 and the base 410 are of an integrally formed structure, which, for example, may be directly manufactured by means of injection molding. Thus, a mounting and connection process between the first limiting structure 420 and the base 410 can be saved, thereby facilitating the improvement of the assembly efficiency.

With reference to FIGS. 3, 4, 6 and 8, according to some embodiments of the present application, the battery 10 further includes an electrical connecting sheet 600. The battery cell 200 further includes a terminal post 210, the electrical connecting sheet 600 is connected to the terminal post 210 of the battery cell 200, and the mounting frame 400 is pressed against and fixed to the surface of the battery cell 200 via the electrical connecting sheet 600.

The terminal post 210 is a component that connects the inside and the outside of the battery cell 200, and one end of the terminal post 210 is connected to the battery core assembly inside the battery cell 200. The terminal post 210 may protrude from the end cap at an end portion of the battery cell 200, and the terminal posts 210 of the plurality of battery cells 200 are connected to each other via the electrical connecting sheets 600, such that the battery cells 200 can be connected in series or in parallel. The electrical connecting sheet 600 may be a metal sheet having excellent conductivity characteristics.

According to the embodiment of the present application, the electrical connecting sheet 600 is fixedly connected to the terminal post 210 of the battery cell 200, and the electrical connecting sheet 600 is tightly pressed against and attached to the surface of the battery cell 200, so that the arrangement of the mounting frame 400 between the electrical connecting sheet 600 and the surface of the battery cell 200 can fix the mounting frame 400. The mounting frame 400 is fixed with the electrical connecting sheet 600 that must be used in the battery 10, so that some fixing procedures can be omitted.

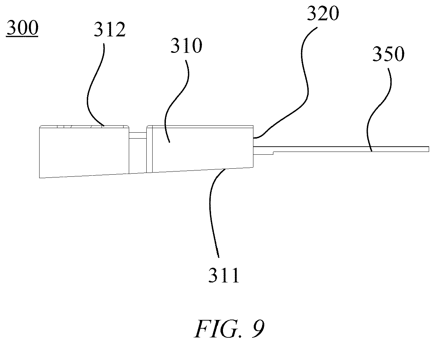

According to some other embodiments of the present application, as shown in FIG. 9, the shell 310 includes a shell bottom plate 311 and a shell top plate 312. The shell top plate 312 is not parallel to the shell bottom plate 311, such that the shell 310 has a cross-sectional area gradually reduced from the end away from the opening 320 to the end close to the opening 320.

The shell top plate 312 is not parallel to the shell bottom plate 311, so that the entire shell 310 is in a wedge-shaped structure, with the cross-sectional area of the shell 310 gradually reduced from the end away from the opening 320 to the end close to the opening 320. In this case, the mounting of the shell 310 on the surface of the battery cell 200 can achieve the effect of downward inclination of the opening 320.

According to some embodiments of the present application, the shell bottom plate 311 is attached to the surface of the battery cell 200.

On the basis that the shell top plate 312 and the shell bottom plate 311 of the shell 310 are not parallel to each other, the shell 310 has the effect of downward inclination of the opening 320. In this case, the shell 310 can be directly attached to the surface of the battery cell 200. Specifically, connection between the shell 310 and the battery cell 200 can be achieved by means of various manners such as welding, screw connection, and bonding.

With reference to FIGS. 3 to 6, according to some embodiments of the present application, a battery 10 includes a temperature sampling assembly 300 and at least one battery cell 200. The temperature sampling assembly 300 includes a shell 310. One end of the shell 310 is provided with an opening 320 configured to receive a sampling signal line 350. The battery 10 further includes a mounting frame 400 and an elastic thermally-conductive gasket 500. The mounting frame 400 is connected to the battery cell 200, the elastic thermally-conductive gasket 500 is attached to a surface of the battery cell 200, the mounting frame 400 is configured to mount the shell 310, and the elastic thermally-conductive gasket 500 is located between the shell 310 and the battery cell 200; and under a combined limiting action of the mounting frame 400 and the elastic thermally-conductive gasket 500, the shell 310 is fixed on the battery cell 200 in an orientation where the opening 320 is downwardly inclined. The mounting frame 400 includes a base 410, a first limiting structure 420 and a second limiting structure 430. The base 410 is provided with a through groove 411 configured to accommodate the shell 310, the first limiting structure 420 and the second limiting structure 430 are arranged on the base 410, the shell 310 is limited in the through groove 411 by means of the first limiting structure 420 and the second limiting structure 430, and a distance between the first limiting structure 420 and the opening 320 of the shell 310 is greater than a distance between the second limiting structure 430 and the opening 320 of the shell 310; and the first limiting structure 420 includes a first limiting portion 421 configured to press against the shell 310, the second limiting structure 430 includes a second limiting portion 431 configured to press against the shell 310, and the first limiting portion 421 is arranged higher than the second limiting portion 431. The first limiting portion structure 420 and the second limiting structure are both snap-fits 42.

According to the battery in the embodiments of the present application, the shell 310 of the temperature sampling assembly 300 is provided with the opening 320, the opening 320 is configured to receive the sampling signal line 350, and under a combined action of the mounting frame 400 and the elastic thermally-conductive gasket 500, the shell 310 may be mounted on the battery cell 200 in the downwardly inclined direction, such that when condensed water generated in the battery is adhered to a surface of the temperature sampling assembly 300 or a surface of the battery cell 200, the downwardly inclined opening 320 of the temperature sampling assembly 300 can prevent the condensed water from reversely flowing into the shell 310 from the opening 320. In this way, the risk of damage to the temperature sampling assembly 300 due to the condensed water can be reduced, thereby facilitating the improvement of the stability of the temperature sampling assembly 300 and prolonging the service life of the temperature sampling assembly, and further facilitating the improvement of the reliability of the battery 10. In addition, the snap-fit 422 has the advantages of a simple structure and convenient mounting, and it is thus conducive to improvement in the mounting efficiency of the temperature sampling assembly 300, and is further conducive to saving in cost.

A second aspect of the present application provides a power consuming apparatus, including a battery 10 in any embodiment in the first aspect. The battery 10 is configured to supply electric energy for the power consuming apparatus.

According to the power consuming apparatus in the embodiment of the present application, the battery includes a temperature sampling assembly 300 and at least one battery cell 200. The shell 310 of the temperature sampling assembly 300 is provided with the opening 320, the opening 320 is configured to receive a sampling signal line 350, and the temperature sampling assembly 300 is mounted on the battery cell 200 with the opening 320 being downwardly inclined, such that when condensed water generated in the battery is adhered to a surface of the temperature sampling assembly 300 or a surface of the battery cell 200, the downwardly inclined opening 320 of the temperature sampling assembly 300 can prevent the condensed water from reversely flowing into the shell 310 from the opening 320. In this way, the risk of damage to the temperature sampling assembly 300 due to the condensed water can be reduced, thereby facilitating the improvement of the stability of the temperature sampling assembly 300 and prolonging the service life of the temperature sampling assembly, and further facilitating the improvement of the reliability of the battery 10.

A third aspect of the present application provides a method for manufacturing a battery, the method including: providing a temperature sampling assembly 300 and at least one battery cell 200. The temperature sampling assembly 300 includes a shell 310, one end of the shell 310 is provided with an opening 320 configured to receive a sampling signal line, the temperature sampling assembly 300 is mounted on the battery cell 200, and the opening 320 is provided in a downwardly inclined direction.

In the battery manufactured by the method for manufacturing a battery in the embodiment of the present application, the shell 310 of the temperature sampling assembly 300 is provided with the opening 320, the opening 320 is configured to receive a sampling signal line 350, and the temperature sampling assembly 300 is mounted on the battery cell 200 with the opening 320 being downwardly inclined, such that when condensed water generated in the battery is adhered to a surface of the temperature sampling assembly 300 or a surface of the battery cell 200, the downwardly inclined opening 320 of the temperature sampling assembly 300 can prevent the condensed water from reversely flowing into the shell 310 from the opening 320. In this way, the risk of damage to the temperature sampling assembly 300 due to the condensed water can be reduced, thereby facilitating the improvement of the stability of the temperature sampling assembly 300 and prolonging the service life of the temperature sampling assembly, and further facilitating the improvement of the reliability of the battery 10.

Finally, it should be noted that the above embodiments are merely used for illustrating rather than limiting the technical solutions of the present application; and although the present application has been illustrated in detail with reference to the above embodiments, it should be understood by those of ordinary skill in the art that the technical solutions described in the above embodiments can still be modified, or some or all of the technical features in the technical solutions can be equivalently substituted; and such modifications or substitutions do not make the essence of the corresponding technical solutions depart from the scope of the technical solutions of the embodiments of the present application, and should fall within the scope of the claims and the description of the present application. In particular, the various technical features mentioned in the various embodiments can be combined in any way as long as no structural conflict exists. The present application is not limited to the specific embodiments disclosed herein but includes all the technical solutions that fall within the scope of the claims.

## Claims

1. A battery, **characterized by** comprising:
at least one battery cell; and
a temperature sampling assembly, wherein the temperature sampling assembly comprises a shell, one end of the shell is provided with an opening configured to receive a sampling signal line, the temperature sampling assembly is mounted on the battery cell, and the opening is provided in a downwardly inclined direction.

2. The battery according to claim 1, **characterized by** further comprising a mounting frame and an elastic thermally-conductive gasket, wherein the mounting frame is connected to the battery cell, the elastic thermally-conductive gasket is attached to a surface of the battery cell, the mounting frame is configured to mount the shell, and the elastic thermally-conductive gasket is located between the shell and the battery cell; and
under a combined limiting action of the mounting frame and the elastic thermally-conductive gasket, the shell is fixed on the battery cell in an orientation where the opening is downwardly inclined.

3. The battery according to claim 2, **characterized in that** the mounting frame comprises a base, a first limiting structure and a second limiting structure, wherein the base is provided with a through groove configured to accommodate the shell, the first limiting structure and the second limiting structure are arranged on the base, the shell is limited in the through groove by means of the first limiting structure and the second limiting structure, and a distance between the first limiting structure and the opening of the shell is greater than a distance between the second limiting structure and the opening of the shell; and
the first limiting structure comprises a first limiting portion configured to press against the shell, the second limiting structure comprises a second limiting portion configured to press against the shell, and the first limiting portion is arranged higher than the second limiting portion.

4. The battery according to claim 3, **characterized in that** the first limiting structure is a snap-fit or a pressure strip member.

5. The battery according to claim 3, **characterized in that** the second limiting structure is a snap-fit or a pressure strip member.

6. The battery according to claim 4 or 5, **characterized in that** the snap-fit comprises a support portion and a snap-fit portion located at an upper end of the support portion; and
the pressure strip member comprises a pressure strip and a connector, wherein an end portion of the pressure strip is connected to the base via the connector.

7. The battery according to claim 3, **characterized in that** the first limiting structure comprises a side plate and a top plate arranged at an upper end of the side plate, wherein the top plate is the first limiting portion.

8. The battery according to claim 7, **characterized in that** the side plate is a "C"-shaped plate, and/or the top plate, the side plate and the base are of an integrally formed structure.

9. The battery according to any one of claims 2-8, **characterized by** further comprising an electrical connecting sheet, wherein the battery cell further comprises a terminal post, the electrical connecting sheet is connected to the terminal post of the battery cell, and the mounting frame is pressed against and fixed to the surface of the battery cell via the electrical connecting sheet.

10. The battery according to claim 1, **characterized in that** the shell comprises a shell bottom plate and a shell top plate, wherein the shell top plate is not parallel to the shell bottom plate, such that the shell has a cross-sectional area gradually reduced from the end away from the opening to the end close to the opening.

11. The battery according to claim 10, **characterized in that** the shell bottom plate is attached to the surface of the battery cell.

12. A power consuming apparatus, **characterized by** comprising a battery according to any one of claims 1 to 11.

13. A method for manufacturing a battery, **characterized by** comprising:
providing at least one battery cell; and
a temperature sampling assembly, wherein the temperature sampling assembly comprises a shell, one end of the shell is provided with an opening configured to receive a sampling signal line, the temperature sampling assembly is mounted on the battery cell, and the opening is provided in a downwardly inclined direction.
